(19) Europäisches Patentamt
European Patent Office
Office européen des brevets

(11) **EP 1 071 598 B1**

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(21) Anmeldenummer: **00903694.8**

(22) Anmeldetag: **14.02.2000**

(51) Int Cl.:
***B60T 13/74*** *(2006.01)*   ***F16D 65/16*** *(2006.01)*

(86) Internationale Anmeldenummer:
**PCT/EP2000/001207**

(87) Internationale Veröffentlichungsnummer:
**WO 2000/048884 (24.08.2000 Gazette 2000/34)**

(54) **SCHEIBENBREMSE FÜR FAHRZEUGE UND STEUERUNGSVERFAHREN**

DISC BRAKE SYSTEM FOR VEHICLES AND CONTROL PROCEDURE

FREIN A DISQUE POUR VEHICULE, ET PROCEDE DE COMMANDE

(84) Benannte Vertragsstaaten:
**DE FR GB IT SE**

(30) Priorität: **15.02.1999 DE 19906227**

(43) Veröffentlichungstag der Anmeldung:
**31.01.2001 Patentblatt 2001/05**

(73) Patentinhaber: **KNORR-BREMSE SYSTEME FÜR NUTZFAHRZEUGE GMBH**
**80809 München (DE)**

(72) Erfinder:
• **BAUMGARTNER, Hans**
  **D-85368 Moosburg (DE)**
• **BIEKER, Dieter**
  **D-83064 Raubling (DE)**
• **PAHLE, Wolfgang**
  **D-74080 Heilbronn (DE)**
• **LAXHUBER, Thomas**
  **D-84323 Massing (DE)**

(56) Entgegenhaltungen:
**EP-A- 0 125 870        EP-A- 0 531 643**
**DE-A- 4 212 405        DE-A- 4 403 740**

EP 1 071 598 B1

**Beschreibung**

Die Erfindung betrifft eine Scheibenbremse für Fahrzeuge nach dem Oberbegriff des Anspruches 1 und ein Verfahren zu deren Steuerung nach dem Oberbegriff des Anspruches 13.

Eine gattungsgemäße Scheibenbremse ist aus der DE 42 12 405 bekannt. Die Mechanik der in dieser Schrift gezeigten, pneumatisch betätigten Scheibenbremse hat sich im Einsatzbereich "Nutzfahrzeuge" bestens bewährt. Die Erfindung setzt ausgehend von dieser Konstruktion bei der Idee an, die an sich bewährte Bremskonstruktion so weit wie möglich beizubehalten, aber den pneumatischen Antrieb durch eine Möglichkeit zur elektromechanischen Betätigung zu ergänzen. Zwar sind elektromechanisch betätigte Bremsen an sich bekannt. Diese bekannten elektromechanischen Bremsen eignen sich jedoch bisher nicht für die im Nutzfahrzeugbereich auftretenden hohen Kräfte. Die Erfindung geht demgegenüber einen anderen Weg, indem sie die Bremsmechanik fast unverändert läßt und lediglich an geeigneter Stelle die pneumatische Betätigung durch einen auf den Drehhebel direkt - oder indirekt über zwischengeschaltete weitere Bauelemente - einwirkenden elektromechanischen Antrieb ersetzt oder ergänzt.

Bei einer besonders bevorzugten Ausführungsform der Erfindung wird der elektromotorische Antrieb durch einen elektromechanisch betätigten Federspeicher- oder Kombizylinder realisiert, wobei der letztere weiterhin durch einen pneumatisch betätigten Bremszylinderabschnitt ergänzt wird.

Federspeicher werden hauptsächlich zur Betätigung von Feststellbremsen im Nutzfahrzeugbereich eingesetzt. Prinzipiell existieren zur Zeit verschiedene Methoden zur Fixierung eines Fahrzeugs in der Parkstellung. Bei leichteren Fahrzeugen wird eine Feststellbremswirkung hauptsächlich durch einen reinen Seilzugmechanismus erreicht. Der Fahrer betätigt einen Hebel, an dessen einem Ende ein Seilzug befestigt ist, der an üblicherweise zwei Rädern des Fahrzeugs eine Bremskraft ausübt.

Federspeicherzylinder werden i.allg. derart gebaut, daß beim Entlüften des Zylinders eine Zug- oder Druckwirkung entsteht. Die Betätigungskraft für die Radbremse wird durch eine starke Druckfeder aufgebracht, die sich am Gehäuse des Zylinders abstützt und die Zugkraft über einen Federteller und einen Kugelhalter auf die Kolbenstange überträgt. In seiner Fahrtstellung wird der Zylinder über ein Handbremsventil belüftet. Zum Bremsen wird über das Handbremsventil der Druck im belüfteten Raum gesenkt. Die Druckfeder zieht entsprechend der Druckabsenkung die Kolbenstange in den Zylinder, wodurch die Radbremse betätigt wird. Der Federraum ist über den Faltenbalg entlüftet.

Neben der pneumatischen Betätigung des Federspeicherzylinders ist insbesondere bei Schienenfahrzeugen auch der Einsatz eines elektromotorischen Antriebes zur Spannung der Feder des Federspeicherzylinders diskutiert worden. Eine derartige Zuspannvorrichtung ist beispielsweise aus der EP 0 129 969 bekannt. Diese Schrift zeigt eine Zuspannvorrichtung für Schienenfahrzeugbremsen, bei welcher die Antriebswelle eines Elektromotors eine Gewindespindel eines Gewindegetriebes antreibt. Die drehbare Gewindespindel ist axial fixiert und trägt eine Kugelumlaufmutter, welche in einem Federteller sitzt, der sich in ein Schubzugrohr fortsetzt, welches mit einem Bremsgestänge zur Betätigung der Bremsbacken einer Scheibenbremse für Schienenfahrzeuge verbunden ist. Das Schubzugrohr wird beim Zuspannen der Bremse von einer Speicherfeder aus dem Gehäuse nach außen gedrückt. Bei Strombeaufschlagung des Elektromotors spannt dieser über den Gewindetrieb die Speicherfeder, welche bei ihrem Zusammenziehen das Schubzugrohr in das Gehäuse zurückzieht und damit die Bremse löst.

Der Elektromotor bzw. die Abtriebsachse des Elektromotors ist im wesentlichen parallel zur Gewindespindel des Gewindetriebes angeordnet, wobei auf der Abtriebswelle des Elektromotors ein Ritzel sitzt, welches ein weiteres auf der Gewindespindel angebrachtes Ritzel antreibt.

Aus der gattungsbildenden EP 0 283 947 ist darüberhinaus eine elektromotorische Betätigungsvorrichtung für einen Federspeicher bekannt, die einen regelbaren Elektro-Aufzugsmotor für den bei offener Bremse gespannten und sich beim Bremshub entspannenden Federspeicher aufweist. Eine Elektromagnetbremse wirkt beim Abschalten des Elektromotors als "Haltebremse" für den Federspeicher. Damit sich die Feder nicht sofort wieder entspannt, muß eine bestimmte Haltekraft aufgebracht werden. Diese wird durch ständige Bestromung der Elektromagnetbremse erreicht.

Die Lösung des Anspruches 2 stellt demgegenüber eine Scheibenbremse mit elektromechanischem Antrieb für den Federspeicher bereit, die es ermöglicht, mit geringem Strom- und Kraftbedarf die Federspannung einzustellen und auf einem eingestellten Niveau zu halten. Dazu umfaßt die Zuspannvorrichtung einen Federspeicher-Bremszylinderabschnitt mit einem Stößel zur Betätigung des Drehhebels, welcher folgendes aufweist: eine von einem Antrieb spannbare Feder zur Betätigung eines Stößels zum Zuspannen und Lösen der Fahrzeugbremse; wobei der Antrieb einen Elektromotor und ein dem Elektromotor nachgeschaltetes Getriebe umfaßt; und wobei dem Antrieb eine vom Elektromotor getrennte Haltevorrichtung zum Halten der gespannten Feder zugeordnet ist, die eine mechanisch und/ oder elektromagnetisch betätigbare Bremse aufweist, welche die Kraft zum Halten der Feder erzeugt, vorzugsweise mechanisch. Zur Realisierung der Bremse ist beispielsweise eine an sich bekannte Federdruckbremse geeignet. Damit wird die Kraft zum Halten des Federspeichers mechanisch aufgebracht. Daraus resultiert der Vorteil minimalen Stromverbrauchs bei verlängerter Lebensdauer.

Ein weiterer Vorteil dieser Variante der Erfindung ist darin zu sehen, daß praktisch keinerlei Anpassung der Scheibenbremse an den elektromotorischen Antrieb notwendig ist. Sogar der Bremssattel bleibt unverändert. Es ist lediglich notwendig, den pneumatisch betätigten Bremszylinder durch den elektromechanisch betätigten Bremszylinder zu ersetzen oder diesen um den elektromechanisch betätigten Bremszylinder zu ergänzen.

Nutzfahrzeuge kleinerer Bauart besitzen dagegen i. allg. keine zusätzlichen Einrichtungen, die Druckluft benötigen, da sie über hydraulische Betriebsbremsen verfügen.

Die Druckluft wird nur zur Betätigung der Feststellbremsanlage benötigt. Dies ist ein erheblicher Kostenaufwand, da allein zu diesem Zweck der Einbau von Kompressoren, Luftdruckbehältern, Ventilen etc. vonnöten ist. Auch dieser Aufwand läßt sich mit der vorgeschlagenen elektromechanischen Lösung einsparen. Auch der Platzbedarf läßt sich mit der vorgeschlagenen modulartigen elektromechanischen Lösung reduzieren, da die elektrischen Steuereinheiten weitaus kleiner sind als vergleichbare hydraulische oder pneumatische.

Zweckmäßig wird die Halteeinrichtung derart im Kraftübertragungsweg vom Elektromotor zur Feder angeordnet, daß die Kraft zum Halten der gespannten Feder durch die Getriebeübersetzung reduziert ist. Mit der Erfindung ist es auch möglich, durch eine Kombination aus der Motor-Getriebeeinheit und der elektrisch und mechanisch auszulösenden Haltevorrichtung aufgrund der Übersetzung eine Federkraftreduktion zu realisieren.

Vorzugsweise sind die Gewindespindel und der Stößel zueinander axial verschieblich angeordnet, und zwar zweckmäßig über eine Langlochverbindung, eine Keilverbindung oder ein elastisches Element. Die axial um einen definierten Weg verschiebliche Verbindung bietet den Vorteil einer automatischen "Nachstellung" der Feder des Federspeichers bei heißgelaufener Bremse. Beim Abkühlen und dem damit verbundenen Schrumpfen der Beläge und weiterer Elemente behält die Feder den Spielraum, um die Bremse um den auftretenden "Schrumpfbetrag" nachzustellen bzw. nachzuziehen und damit ein unbeabsichtigtes Wegrollen des Fahrzeuges zu verhindern. Um das Nachstellen zu gewährleisten, nutzt man die Trägheit des Systems, das die Spindel nach Erreichen des Kräftegleichgewichtes an der Feder bis zum Anschlag des Langloches weitertreibt.

Bei einer weiteren vorteilhaften Variante der Erfindung ist der Drehhebel mit einer Verzahnung versehen, vorzugsweise an seiner vom Exzenterwelle abgewandten Außen-Umfangswandung, in welche ein Abtriebsrad eines Getriebes eine Elektromotors eingreift. Auch bei dieser Variante der Erfindung kann die Grundkonstruktion der Scheibenbremse im wesentlichen beibehalten werden. Der Elektromotor dreht hier direkt über ein Getriebe den Drehhebel. Damit kann optional oder alternativ zusätzlich an den Drehhebel ein Federspeicherzylinder oder aber auch der normale pneumatische Bremszylinder angeschlossen werden. Lediglich der Bremssattel bedarf einer konstruktiven Anpassung an den Elektromotorantrieb.

Das erfindungsgemäße Verfahren zur Steuerung der Scheibenbremse bzw. zur Steuerung ihrer Zuspannvorrichtung zeichnet sich dadurch aus, daß die Zuspannvorrichtung auf einfache Weise als Betriebs- oder Parkbremse nutzbar ist. Dazu wird bei einer Betriebs- oder Parkbremsung die vorgespannte Feder des Federspeichers durch ein Lösen der Haltevorrichtung entspannt und damit die Bremse zugespannt, wobei durch Betätigung der Haltevorrichtung die Feder beim Erreichen eines vorgegebenen Bremskraftniveaus durch eine mechanisch wirkende Bremse arretiert wird. Bei einer Parkbremsung ist es zudem vorteilhaft, wenn im Umkehrpunkt einer durch das Mitdrehen des Elektromotors und des Getriebes beim Lösen der Feder bedingten mechanischen Schwingung beim Rückdrehen des Getriebes durch die Feder die Halteeinrichtung einsetzt, so daß eine zusätzliche Bremskraft erzeugt wird.

Zweckmäßig wird der Elektromotor dabei dazu genutzt, bei einer Bremsung die Federkraft zu unterstützen und die Geschwindigkeit des Systems und/oder die Bremskraft zu erhöhen.

Nach einer bevorzugten Variante der Erfindung wird die Haltevorrichtung ein- oder mehrfach geöffnet, um bei heißgelaufener Bremse auf einfache Weise die Gleichgewichtsstellung der Feststellbremsfunktion einzustellen, während sich die Bremse abkühlt.

Bei einer weiteren Variante der Erfindung wird zur Erzielung einer schnellen Reaktion des Systems bei Betriebsbremsungen die Haltebremse außer Kraft gesetzt und die Haltekraft erfolgt durch Bestromung der Motor-Getriebeeinheit.

Weitere vorteilhafte Ausbildungen der Erfindung sind den übrigen Unteransprüchen zu entnehmen.

Nachfolgend wird die Erfindung anhand von Ausführungsbeispielen unter Bezug auf die Zeichnung näher beschrieben. Es zeigt:

Fig. 1 eine schematische, teilgeschnittene Darstellung eines für die Erfindung geeigneten elektromechanischen Federspeichers;

Fig. 2 eine Kräftediagramm zur Veranschaulichung des erfindungsgemäßen Steuerverfahrens,

Fig. 3 eine Schnittansicht einer erfindungsgemäßen Scheibenbremse,

Fig. 4a,b Detailansichten der Scheibenbremse aus Fig. 3,

Fig. 5 eine Schnittansicht einer weiteren erfindungsgemäßen Scheibenbremse,

Fig. 6, 7 Ansichten weiterer erfindungsgemäßer Scheibenbremsen..

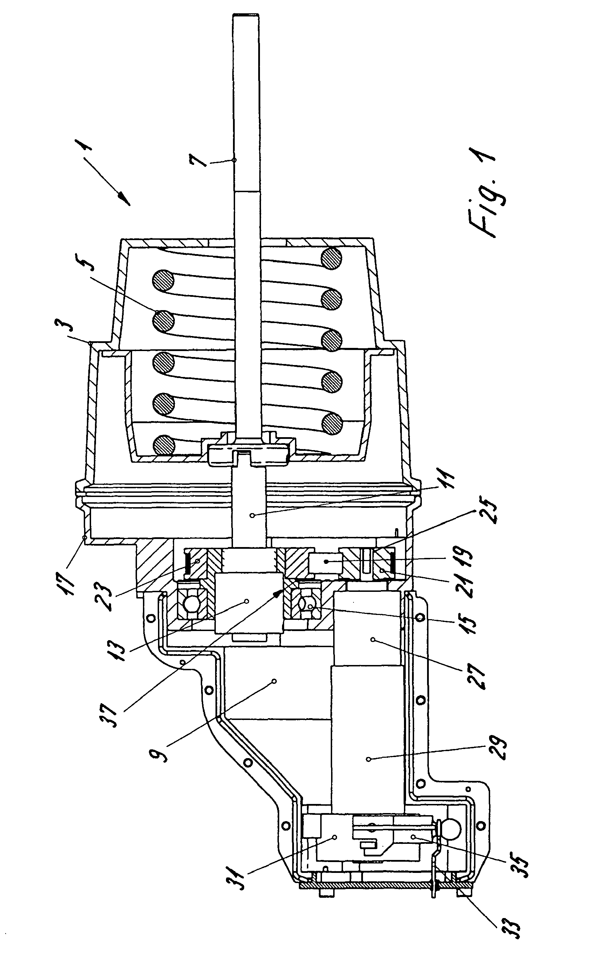

Fig. 1 zeigt einen Federspeicher 1 mit einem ersten Gehäuseabschnitt 3, der eine Feder 5 aufnimmt, die auf eine (hier nicht dargestellte) Bremsanlage über einen Stößel 7 eine Kraft ausübt, um ein Fahrzeug abzubremsen bzw. um eine Haltewirkung zu erzielen.

Auf dem Federspeicher 1 sitzt eine elektromechanische Auslöseeinheit 9. Zur Ausübung von Kraft auf den Federspeicher 1 dient ein Linearantrieb, der mit Hilfe eines Kugelgewindetriebes realisiert wird (denkbar sind auch Rollengewindetriebe u.ä.). Dazu überträgt die axial verschiebliche Kugelgewindespindel 11 die Kraft auf den Stößel 7, was zum Spannen der Feder 5 führt. Auf der Kugelgewindespindel 11 sitzt eine Spindelmutter 13, die über eine Lagerung 15 in einem zweiten Gehäuseabschnitt 17 fixiert ist. Ein besonderer Vorteil des Antriebs mit einem Kugelgewindetrieb (oder einem Planetengewindetrieb etc.) liegt in dem damit zu erzielenden günstigen Gesamtwirkungsgrad im Vergleich zu hydraulischen oder pneumatischen Lösungen.

Der Antrieb der Spindelmutter 13 erfolgt über einen Zahnriemen(trieb) 19 (denkbar sind auch Kettentriebe, Stirnradgetriebe u.ä.). Vom Zahnritzel 21 wird über den Zahnriemen 19 das Rad 23 angetrieben, welches auf der Spindelmutter 13 sitzt. Das Ritzel 21 ist wiederum auf der Abtriebswelle 25 eines Planetengetriebes 27 (denkbar auch Stirnradgetriebe, Cyclogetriebe u.ä.) befestigt. Das Getriebe 27 ist ebenfalls im Gehäuse 17 fixiert. Der Antrieb des Gesamtsystems wird über einen Elektromotor 29 realisiert.

Um die Bremse in der Fahrstellung halten zu können, ohne den Motor 29 unter Strom zu halten, ist an der Welle des Motors 29 eine mechanisch und elektromagnetisch lösbare Bremse 31 angebracht. Im stromlosen Zustand wird der Motor 29 über einen Federmechanismus in seiner Lage gehalten, was für die gesamte Einheit eine Fixierung bedeutet. Bestromt man die Magnetbremse 31 oder betätigt man mit dem Seilzug 33 die mechanische Lösevorrichtung 35, so kann die Motorwelle in beiden Richtungen frei drehen und die Bremse gelöst bzw. eingelegt werden.

Der gesamte Mechanismus ist so eingestellt, daß zum Entspannen des Federspeichers 1 die Federkraft der Feder 5 ausreicht, d.h. es ist keine Unterstützung durch den Elektromotor 29 notwendig. Lediglich zum Spannen der Feder 5 ist der Motor 29 erforderlich. Das System ist somit selbsthemmungsfrei.

Der Feder 5 gibt ihre Kraft solange an das Gesamtsystem ab, bis sie entweder durch die Wirkung der Magnetbremse 31 wieder gehalten wird oder mit der Federkraft der Bremse im Gleichgewicht steht (Vollbremsung / Parkstellung). In diesem Fall sind jedoch die Massen des Motors 29 und der nachgeschalteten Getriebe (die Gesamtheit der zusammenwirkenden Getriebe trägt das Bezugszeichen 37) auf ihre maximale Drehzahl beschleunigt. Diese kinetische Energie wird in weitere potentielle (Verformungs)Energie an der Bremse umgesetzt, d. h. die Bremse spannt weiter zu. Sobald diese kinetische Energie vollständig umgewandelt ist, wirkt die Magnetbremse 31 und arretiert die gesamte Anordnung. Es liegt damit eine Art "dynamischer Nachspanneffekt" vor. Dieser Effekt läßt sich verstärken, wenn der Elektromotor 29 am Umkehrpunkt der beginnenden gedämpften harmonischen Schwingung, d.h. vor Einsetzen der Magnetbremse 31 erneut anläuft und die Bremskraft weiter erhöht.

Dieser Mechanismus erlaubt es, die Feder 5 kleiner zu dimensionieren, als es allein für die Haltefunktion notwendig wäre. Dies ist ein weiterer bedeutender Vorteil in Hinsicht auf eine weitere Reduzierung des Bauraumes, des Gewichts und der Kosten.

Durch die Magnetbremse 31 kann die Vorrichtung in jeder beliebigen Stellung gehalten werden. Dies führt dazu, daß die Zuspannvorrichtung nicht nur als Parkbremse wirkt sondern durch eine einfache Steuerung auch als Betätigung für die Betriebs- oder Hilfsbremse wirken kann, da die Bremskraft bis zur maximalen Federkraft in beliebiger Höhe aufgebracht werden kann.

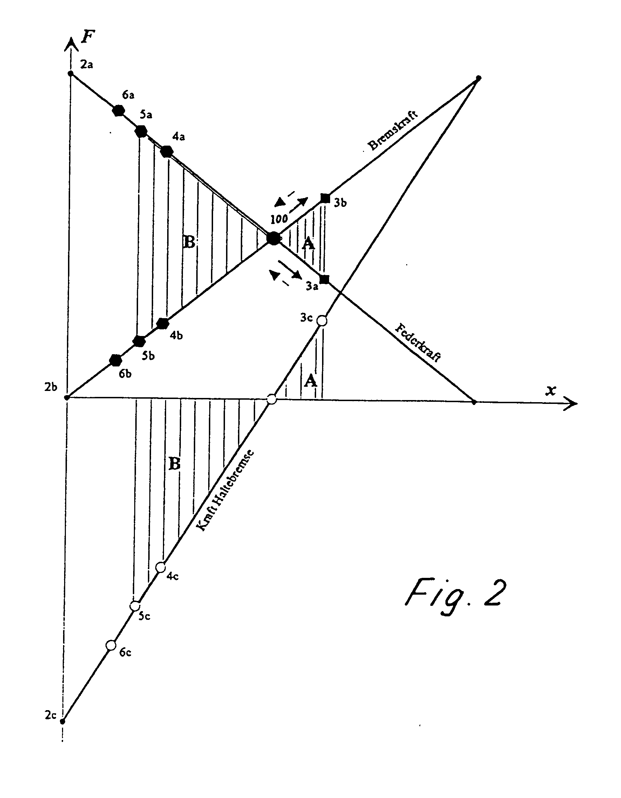

Nachfolgend sei das erfindungsgemäße Steuerungsverfahren nochmals näher anhand der Fig. 2 näher erläutert.

Die Beaufschlagung einer bestimmten Bremskraft erfolgt unter Abgabe von gespeicherter potentieller Energie der Federspeicherfeder (Federenergie/Fig. 2). Wirkt nun allein die Federkraft und die elastische Kraft der Bremse, so stellt sich ein Kräftegleichgewicht ein (Fig. 2, Punkt 100). Je nach der Größe der Feder 5 und deren Vorspannung ist die Bremskraft größer oder geringer. Dies ist das Verfahrensprinzip einer heutigen Federspeicher-Feststellbremsanlage. Die Erfindung ergänzt dieses Verfahren wie folgt:

A) Wirkung als Parkbremse / Hilfsbremse:

In der Parkstellung (Annahme: Federkraft und Bremskraft im Gleichgewicht, Punkt 100) wird die Haltebremse in Lösestellung (Freigabe) gebracht, und der Federspeicher 1 mit Hilfe des Motors 29 und des Getriebes 37 gespannt (Punkte 2a und 2b). Anschließend wird die Haltebremse wieder auf Sperrstellung geschaltet (2c). Soll die Parkstellung wieder erreicht werden, so wird die Haltebremse geöffnet und die Feder 5 des Federspeichers 1 entspannt sich und setzt das gesamte Motor-Getriebe-System in Bewegung. Gleichzeitig erhöht sich die Kraft an der Bremse. Ist nun der Gleichgewichtspunkt 100 erreicht, so befinden sich die Kräfte der Feder 5 und der Bremse im Gleichgewicht. Da die Drehmassen des Motors 29 und des Getriebes 37 in Bewegung sind, spannt die Trägheit die Bremse weiter zu, resp.

entspannt die Feder 5, bis diese Trägheitsmassen vollständig abgebremst sind (Punkte 3a/b). Nun würde das System versuchen, diese Vorspannung wieder abzubauen und sich auf den Gleichgewichtspunkt 100 einzupendeln. Zu diesem Zeitpunkt aber schaltet die Haltebremse auf die Blockierstellung und arretiert das System im vorgespannten Zustand 3a/b. Dies bedeutet, zwischen der Energie der Feder 5 des Federspeichers 1 und der Federenergie der Bremse besteht eine Differenz

$$\int_{3}^{100}(F_{Bremse} - F_{Feder})dx = A$$

Diese Energie wird von der Haltebremse aufgebracht, um die Vorspannung beizubehalten (Punkt 3c). Der Vorgang läßt sich noch unterstützen, indem der Elektromotor zum Zeitpunkt des Erreichens des oberen Umkehrpunkts 3a/b der Schwingung und vor Schalten der Haltebremse auf die Hemmstellung zusätzlich anläuft und die Vorspannung weiter erhöht.

Tritt der Fall ein, daß das Fahrzeug bei heißen Bremsen abgestellt und die Feststellbremse eingelegt wird, so verschiebt sich das Kraftniveau von 3a/b beim Abkühlen durch das damit verbundene Schrumpfen der Bremse in Richtung Punkt 100. Ist die Vorspannung des Systems groß genug, erreicht es im Normalfall nicht den Punkt 100. Sollte jedoch der Fall eintreten, daß die Bremse so heiß gefahren wurde, daß sich beim Abkühlen das Bremskraftniveau unterhalb Punkt 100 befindet, so wird die gespeicherte Federenergie der Feder 5 wieder größer als die Federenergie der Bremse.

Sollte die Haltebremse in der Hemmstellung bleiben, so kann sich diese Federkraft nicht ausgleichen. Nun wird die Haltebremse gelöst, und der Zustand 100 pendelt sich ein ("nachstellender Federspeicher"). Unter Umständen ist dieser Vorgang mehrmals zu wiederholen.

Aus diesem Funktionsprinzip wird deutlich, daß es ist nicht mehr nötig ist, daß der Fahrer von Hand die Feststellbremse einlegt, dies kann von einem elektronischen System übernommen werden. Für den Fall des Ausfalls dieses Systems existiert die mechanische Auslösevorrichtung 33, welche die Haltebremse dauerhaft in Lösestellung fixiert und somit das Kraftniveau am Punkt 100 garantiert wird.

B) Wirkung als Betriebsbremse:

Im Betriebsbremsfall erfolgt die Steuerung ähnlich zur Nutzung als Feststellbremsvorrichtung. Bei vorgespannter Feder 5 (Punkte 2a/b/c) wird die Haltebremse kurz gelöst und bei Erreichen eines gewünschten Bremskraftniveaus (z.B. Punkte (5a/b) in Sperrstellung (5c) geschaltet. Hierbei herrscht ein ähnlicher Energiefall wie bei der Feststellbremse. Die Differenzenergie B aus Federenergie der Feder und Federenergie der Bremse wird von der Haltebremse aufgenommen. Um die Bremskraft zu erhöhen, wird die Haltebremse erneut geöffnet, die Feder entspannt sich und gibt Kraft an die Bremse ab, das entsprechende Niveau wird eingestellt (Punkt 4a/b) und die Haltebremse schließt wieder (4c). Zur Verringerung der Bremskraft (z. B. ABS - Fall) wird ebenfalls die Haltebremse geöffnet, nun dreht aber der Elektromotor und spannt die Feder bis zum gewünschten Kraftniveau (Punkt 6a/b).

Um die Geschwindigkeit des Systems zu erhöhen, ist es im Betriebsbremsfall (v. a. im ABS-Fall) nicht notwendig, daß die Haltebremse in jedem Fall wirkt. Für diesen Fall ist es ausreichend, den Motor unter Strom zu halten, um die gewünschte Haltekraft zu erreichen. Damit ist es möglich, auch sehr kurze Systemreaktionszeiten einzuhalten. Der Motor 29 kann in diesem Fall unterstützend für beide Fälle wirken, d.h. er kann auch mit dem Federspeicher 1 mitdrehen. Dies hilft, die Reaktionszeiten zu verkürzen.

Zum Lösen der Betriebsbremse wird die Haltebremse geöffnet und der Motor dreht das System auf die Positionen 2a/b. Anschließend arretiert die Haltebremse erneut (2c).

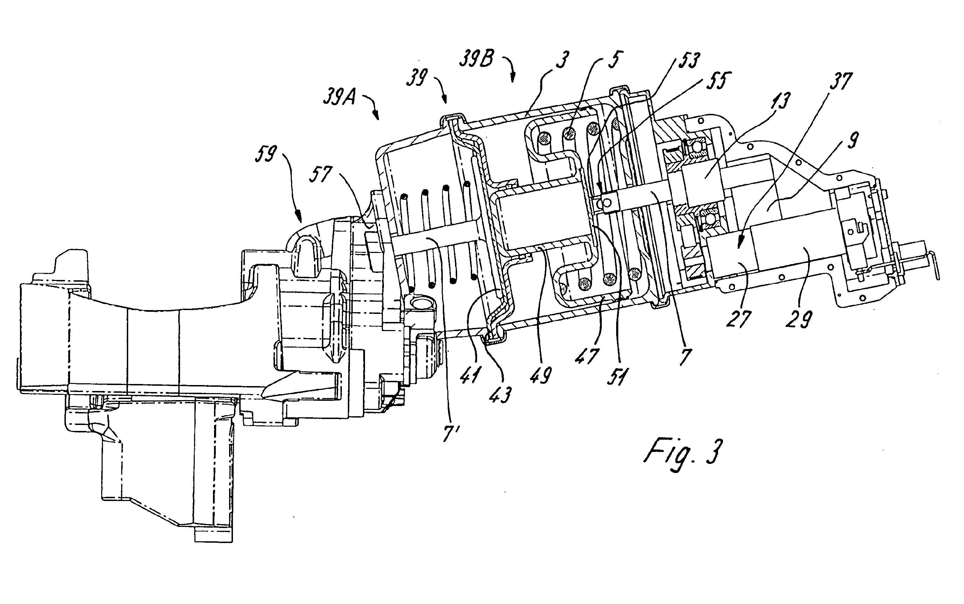

Die Scheibenbremse der Fig. 3 verfügt über einen Kombizylinder 39, der einerseits das Prinzip des Zylinders der Fig. 1 nutzt, andererseits aber so konstruiert ist, daß er die bei pneumatischen Scheibenbremsen üblichen Funktionen des Kombizylinders voll übernehmen kann. Der Aufbau des Kombizylinders unterscheidet sich von herkömmlichen Kombizylindern im wesentlichen nur durch die Art der Betätigung, d.h., die Feder 5 des Kombizylinders kann sowohl für Betriebs- als auch für Feststellbremsungen genutzt werden. Bei einer Betriebs-Bremsbetätigung wird die Stellung des Bremspedales ermittelt und daraus ein Steuersignal errechnet, welches - z.B. über ein EBS-Steuergerät - zur Einstellung der Position der Feder 5 über eine Signalgebung zur Auslöseinheit 9 genutzt wird.

Das Ausführungsbeispiel der Fig. 3 bzw. der Kombizylinder 39 setzt sich aus einem pneumatischen Zylinderabschnitt 39A für die Betriebsbremse und aus einem an diesen angesetzten, mit einem elektromotorischen Antrieb versehen, Federspeicher-Bremszylinderabschnitt 39B als Feststellbremse zusammen. Die Feststellbremse (39B) kann auch mit dem pneumatischen Zylinderabschnitt 39A zusammenwirken. Bei einer Betriebsvariante Variante der Fig. 3 kann die Betriebsbremsfunktion beispielsweise ausschließlich durch den bremsenseitigen, pneumatisch betätigten Membran-Bremszylinderabschnitt 39A mit dem Druckstößel 7 erfolgen. Die Parkbremsfunktion wird dann über den elektromechanisch betätigten Zylinderabschnitt 39B realisiert. Es ist jedoch auch möglich, die Betriebsbremsfunktion durch den elektromechanisch betätigten Zylinder zu unterstützen oder aber den pneumatisch betätigten Zylinder nur als reine Rückfallebene für Notfälle vorzusehen.

Die Gewindespindel 11' wirkt bei dem Kombizylinder 39 ziehend und nicht drückend wie beim Beispiel der Fig. 1, d.h., die Gewindespindel 37' zieht die Feder beim Spannen zusammen. Der Kombizylinder39 bzw. dessen Membranzylinderabschnitt 39A verfügt in an sich bekannter Weise über einen Stößelabschnitt 7' (Kolbenstange), welcher auf den Drehhebel zum Betätigen der Bremsscheibe wirkt.

Der Stößelabschnitt 7' mündet in einem Teller 41, welcher in an sich bekannter Weise mit einer Rückstell-Druckfeder 42 versehen ist und von einer Membran 43 betätigt wird. Anders als bei einer pneumatisch betätigten Scheibenbremse wird die Membran jedoch nicht durch ein Belüften des Bremszylinders sondern - ähnlich zu herkömmlichen Feststellbremsungen mit einem Kombizylinder - auch bei Betriebsbremsungen von der Feder 5 des Federspeicherabschnittes 39B des Kombizylinders 39 betätigt.

Dazu wirkt die Feder 5 auf einen im Gehäuseabschnitt 3 verschieblichen Einsatz 47, der einen hohlzylindrischen Ansatz 49 trägt, der mit einem Ende an der Membran 43 anliegt. An der zur Feder 5 gewandten Seite des Einsatzes ist im Zentrum des Einsatzes 47 ein weiterer Teller 51 befestigt, der einen Ansatz 53 trägt, welcher über eine Langlochverbindung 55 mit dem Stößel 7 verbunden ist, welcher bei einer Spindelbetätigung den Einsatz 47 nach einer Bremsbetätigung zurückzieht und damit die Feder 5 spannt.

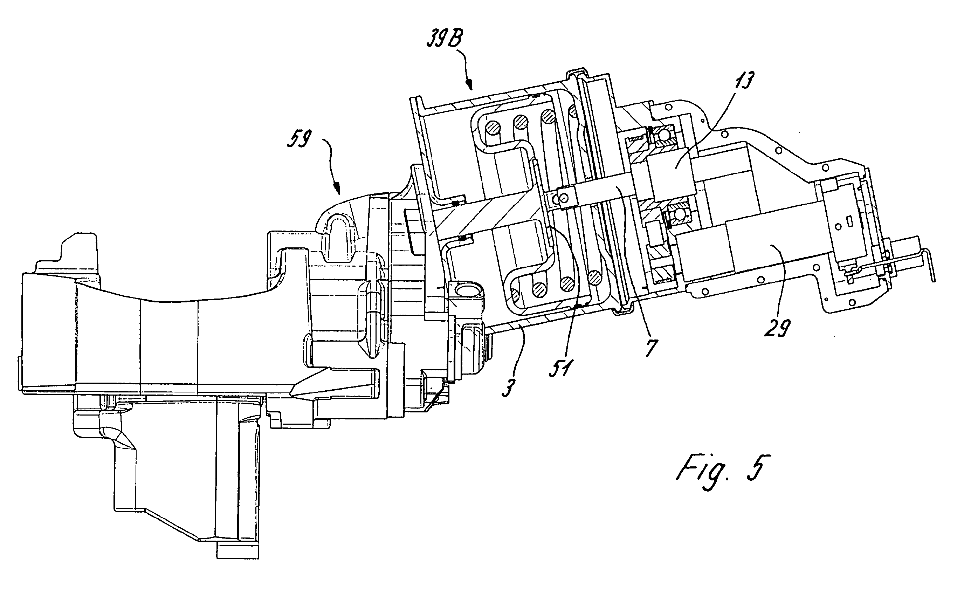

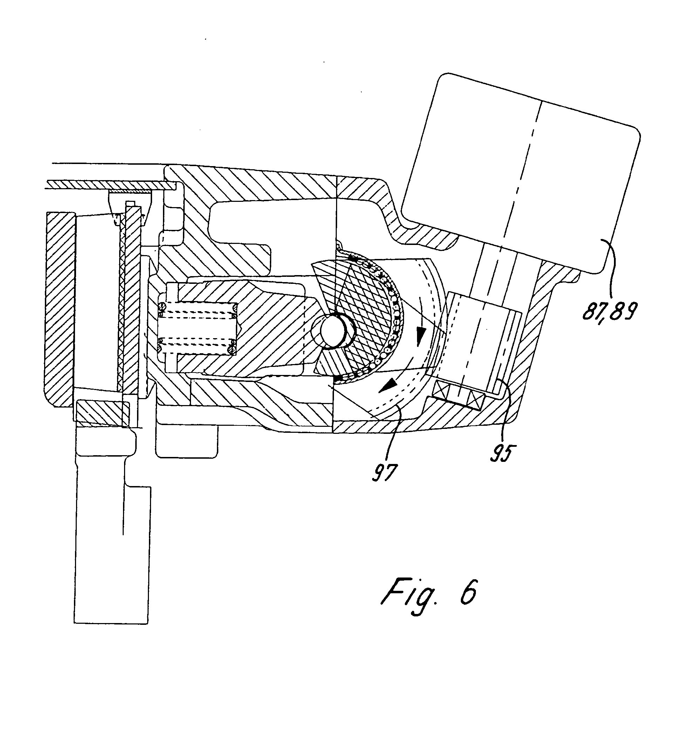

Der Kombizylinder 39 ist in an sich bekannter Weise am Bremssattel 57 der Scheibenbremse 59 befestigt, deren innerer Aufbau dem Aufbau des gattungsgemäßen Standes der Technik vollständig entsprechen kann (siehe auch Fig. 5 und 6).

Das Erkennen des Umkehrpunktes des Elektromotors 29 ist am Zusammenbrechen der vom Motor im Generatorbetrieb abgegebenen Spannung möglich. Die einfachste Steuerung der Haltebremse kann derart erfolgen, daß die Haltebremse durch einen Spannungsimpuls geöffnet wird und dann durch die vom als Generator angetriebenen Elektromotor 29 abgegebene Spannung offen gehalten wird, bis diese Spannung bei langsamer werdendem Motor in der Nähe des Umkehrpunktes zu klein wird.

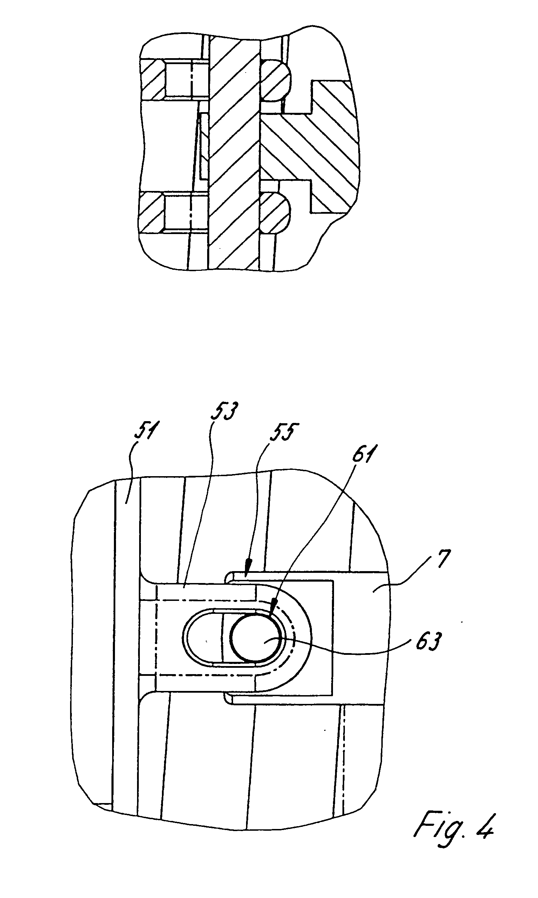

Fig. 4 veranschaulicht anhand von Ausschnittsansichten die Funktion der Langlochverbindung 55. Der Ansatz 53 weist das Langloch 61 auf, in welchem ein Stift 63 des Stößelendes geführt ist. Das Langloch 61 weist einen größeren Durchmesser auf als der Stift 63. Damit ergibt sich eine Alternativlösung zur kontrollierten Öffnung der Arretierung nach Fig. 1 und 2. Die Arretierung muß nach dem Abstellen des Fahrzeuges nicht mehr offen gehalten werden, um die Nachstellung zu gewährleisten. In Fig. 1 dient die Langlochverbindung als Ausgleich bei Schwenkbewegungen und bei Schrumpfungen. Nach Fig. 3 wird dagegen nur ein Schrumpfungsausgleich realisiert.

Nach Fig. 3 ist die Spindel 13 fliegend mit nur einem (Wälz-)Lager 15 gelagert. Die Lagerung kann insofern als fliegend betrachtet werden, da aufgrund des Spiels in der Verbindung von Stößel 7 und Spindel 13 nur bedingt Kräfte aufgenommen werden. Drückt bzw. zieht (Fig. 4) die Spindel mit einer Kraft auf die Feder 5 bzw. zieht an dieser, so bewirkt der Radius im Langloch 61 eine gewisse Zentrierung und eine Lagerkraft an ihr, womit die im Kräftegleichgewicht auftretende statische Unterbestimmtheit der Spindel aufgehoben wird.

Obwohl die Motorachse 25 im vorliegenden Fall parallel zur Federachse liegt, ist dies nicht zwingend notwendig. Es ergibt sich zwar eine sehr kompakte Anordnung. Alternativ ist es aber denkbar, die Achsen gegeneinander abzuwinkeln (z.b. über ein Schneckengetriebe).

Die Arretierung bzw. Haltebremse kann reibschlüssig oder formschlüssig wirken. Die Notauslösung der Arretierung kann zwar über einen Seilzug erfolgen. Denkbar ist es jedoch auch, einen Kondensator vorzusehen, der im Normalbetrieb aufgeladen ist. Mit Hilfe der Energie dieses Kondensators wird die Arretierung gelöst. Sobald dann der Motor angetrieben wird und damit Strom erzeugt (Generatorwirkung), wird die abgegebene Energie zum Offenhalten der Magnetbremse genutzt.

Das Ausführungsbeispiel der Fig. 5 unterscheidet sich von dem der Fig. 3 dadurch, daß der Membran-Bremszylinderabschnitt 39A eingespart wurde, so daß der elektromechanische Federspeicher-Bremszylinderabschnitt 39B stets auch die Betriebsbremsfunktion vollständig übernimmt. Der Stößel 7 wirkt dabei direkt auf den Drehhebel zum Zuspannen der Bremse ein (nicht dargestellt).

Fig. 6 zeigt eine Scheibenbremse 59' für Fahrzeuge mit dem eine Bremsscheibe 65 umfassenden zweiteiligen Bremssattel mit einem vorderen und einem hinteren Abschnitt 57, 67. Der Drehhebel 69 trägt beidseitig einen etwa halbzylindrischen Exzenteransatz 71, der in einem Halbschalenlager 73 gelagert ist und über eine Exzenterwelle 75 und/oder eine Traverse 77 auf wenigstens eine Stellspindel (nicht dargestellt) sowie auf ein an deren bremsscheibenseitigen Ende sitzendes Druckstück 79 und auf eine zuspannseitig im Bremssattel verschiebbar gelagerte Bremsbacke 81 wirkt.

Der Drehhebel 69 ist an seiner der Bremsscheibe abgewandten Seite mit einer Umfangsverzahnung 83 versehen, in welche ein Abtriebs-Stirnrad 85 eines Getriebes 87 des Elektromotors 89 eingreift. Als Feststellbremse dient ein elektromagnetisch betätigbarer Federspeicherzylinder 91, der in an sich bekannter Weise am Bremssattel ansetzt. Der Bremssattel 57 ist zur Aufnahme des Stirnrades 85 sowie des Getriebes und des Motors 29 mit einer Ausnehmung 93 in dem von der Bremsscheibe abgewandten Bereich versehen. Die Betriebsbremse realisiert der Antrieb mit dem Motor 89.

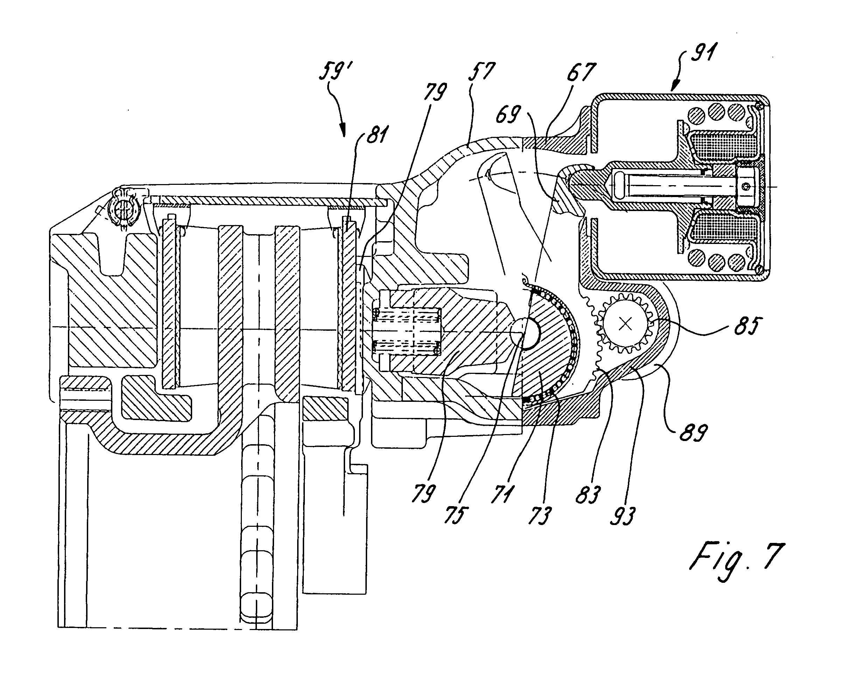

Die Ausführung der Fig. 7 unterscheidet sich von der Bremse nach Fig. 6 dadurch, daß kein Federspeicherzylinder vorgesehen ist und daß der Drehhebel an seiner der Bremsscheibe abgewandten Seite mit einer Schneckenverzahnung 95 versehen ist, in welche ein Schneckenrad 97 des Getriebes 87 des Elektromotors 89 eingreift.

Bezugszeichen

| | |
|---|---|
| Federspeicher | 1 |
| Gehäuseabschnitt | 3 |
| Feder | 5 |
| Stößel | 7,7' |
| Auslöseeinheit | 9 |
| Kugelgewindespindel | 11 |
| Spindelmutter | 13 |
| Lagerung | 15 |
| Gehäuseabschnitt | 17 |
| Zahnriemen | 19 |
| Zahnritzel | 21 |
| Rad | 23 |
| Abtriebswelle | 25 |
| Planetengetriebe | 27 |
| Elektromotor | 29 |
| Magnetbremse | 31 |
| Seilzug | 33 |
| Lösevorrichtung | 35 |
| Getriebe | 37 |
| Kombizylinder | 39 |
| pneumatischer Bremszylinderabschnitt | 39A |
| Federspeicher-Bremszylinderabschnitt | 39B |
| Teller | 41 |
| Rückstell-Druckfeder | 42 |
| Membran | 43 |
| Einsatz | 47 |
| hohlzylindrischer Ansatz | 49 |
| Teller | 51 |
| Ansatz | 53 |
| Langlochverbindung | 55 |
| Bremssattel | 57 |
| Scheibenbremse | 59 |
| Langloch | 61 |
| Stift | 63 |
| Bremsscheibe | 65 |
| Bremssattel | 67 |
| Drehhebel | 69 |
| Exzenteransatz | 71 |
| Halbschalenlager | 73 |
| Exzenterwelle | 75 |
| Traverse | 77 |
| Druckstück | 79 |
| Bremsbacke | 81 |
| Umfangsverzahnung | 83 |
| Stirnrad | 85 |

| Getriebe | 87 |
| Elektromotor | 89 |
| Federspeicherzylinder | 91 |
| Ausnehmung | 93 |
| Schneckenverzahnung | 95 |
| Schneckenrad | 97 |

**Patentansprüche**

1. Scheibenbremse für Fahrzeuge mit

   a) einem eine Bremsscheibe (65) umfassenden Bremssattel (57, 67),
   b) einer innerhalb des Bremssattels (67) angeordneten Zuspannvorrichtung,
   c) wobei die Zuspannvorrichtung einen Drehhebel (69) aufweist, welcher vorzugsweise einen etwa halbzylindrischen Exzenteransatz (71) umfaßt,
   d) wobei vorzugsweise ferner der Exzenteransatz (71) in einem Halbschalenlager (73) exzentrisch gelagert ist und über eine Exzenterwelle (75) und/oder eine Traverse (77) auf wenigstens eine Stellspindel (72, 73) und ein an deren bremsscheibenseitigen Ende sitzendes Druckstück (79) auf eine zuspannseitig im Bremssattel verschiebbar gelagerte Bremsbacke (81) einwirkt,
   **gekennzeichnet durch**
   e) einen auf den Drehhebel (69) direkt - oder indirekt über zwischengeschaltete weitere Bauelemente - einwirkenden elektromechanischen Antrieb (29, 85).

2. Scheibenbremse nach Anspruch 1, **dadurch gekennzeichnet, daß** die Zuspannvorrichtung einen Bremszylinder mit einem einen elektromotorisch betätigten Federspeicher-Bremszylinderabschnitt (39B) mit einem Stößel zur Betätigung des Drehhebels umfaßt, welcher folgendes aufweist:

   a) eine von einem Antrieb spannbare Feder (5) zur Betätigung eines Stößels (7) zum Zuspannen und Lösen der Fahrzeugbremse;
   b) wobei der Antrieb einen Elektromotor (29) und ein dem Elektromotor (29) nachgeschaltetes Getriebe (27, 37) umfaßt;
   c) und wobei dem Antrieb eine Haltevorrichtung zum Halten der gespannten Feder (5) zugeordnet ist, die eine mechanisch und/oder elektromagnetisch betätigbare Bremse (31) aufweist, welche die Kraft zum Halten der Feder erzeugt.

3. Scheibenbremse nach Anspruch 1 oder 2, **dadurch gekennzeichnet, daß** der Bremszylinder ferner einen pneumatisch betätigten Bremszylinderabschnitt (39A) aufweist.

4. Scheibenbremse nach Anspruch 3, **dadurch gekennzeichnet, daß** der elektromotorisch betätigte Federspeicher-Bremszylinderabschnitt (39B) mit dem pneumatisch betätigten (Membran-)Bremszylinderabschnitt (39A) zu einem Kombizylinder (39) zusammengesetzt ist.

5. Scheibenbremse nach einem der vorstehenden Ansprüche, **dadurch gekennzeichnet, daß** die Bremse (31) als elektromagnetisch betätigbare Federdruckbremse ausgelegt ist.

6. Scheibenbremse nach einem der vorstehenden Ansprüche, **dadurch gekennzeichnet, daß** das Getriebe (27, 37) mit einer Spindeleinrichtung (11, 13) zum Spannen der Feder (5) gekoppelt ist, wobei der Elektromotor (29) und ein Abschnitt des Getriebes (27) modulartig parallel zur Spindeleinrichtung (11, 13) zum Spannen der Feder (5) angeordnet sind, wobei die Spindeleinrichtung (11, 31) als Kugel- oder Rollengewindespindel (11) ausgelegt ist, auf welcher eine Spindelmutter (13) sitzt, die über eine Lagerung (15) in einem Gehäuseabschnitt (17) des Federspeicherzylinders (1) fixiert ist.

7. Scheibenbremse nach einem der vorstehenden Ansprüche, **dadurch gekennzeichnet, daß** Getriebe (27) ein Planeten-, Stirnrad-, Schnecken- oder Cyclogetriebe umfaßt, in das antriebsseitig die Antriebswelle (25) des Elektromotors (29) eingreift, wobei das Planeten-, Stirnrad-, Schnecken bzw. Cyclogetriebe (27) über ein Umschlingungsgetriebe wie einen Zahnriemen (19) oder einen Kettentrieb mit der Spindeleinrichtung (11, 13) gekoppelt ist.

8. Scheibenbremse nach einem der vorstehenden Ansprüche, **dadurch gekennzeichnet, daß** die Halteeinrichtung derart im Kraftübertragungsweg vom Elektromotor (29) zur Feder (5) angeordnet ist, daß die Kraft zum Halten der gespannten Feder (5) durch die Getriebeübersetzung reduziert ist.

9. Scheibenbremse nach einem der vorstehenden Ansprüche, **dadurch gekennzeichnet, daß** die Gewindespindel (13) und der Stößel (7) zueinander axial verschieblich angeordnet sind.

10. Scheibenbremse nach einem der vorstehenden Ansprüche, **dadurch gekennzeichnet, daß** die Gewindespindel und der Stößel miteinander über eine Langlochverbindung (55), eine Keilverbindung oder ein elastisches Element verbunden sind.

11. Scheibenbremse nach einem der vorstehenden Ansprüche, **dadurch gekennzeichnet, daß** der Drehhebel mit einer Verzahnung (83, 95) versehen ist, in welche ein Abtriebsrad (85, 97) eines Getriebes des Elektromotors eingreift.

12. Scheibenbremse nach einem der vorstehenden Ansprüche, **dadurch gekennzeichnet, daß** der Drehhebel mit einer Schneckenradverzahnung (95) versehen ist, in welche ein Schneckenrad (97) des Getriebes eingreift.

13. Verfahren zur Steuerung einer Scheibenbremse nach einem der vorstehenden Ansprüche, **dadurch gekennzeichnet, daß** bei einer Betriebs- oder Parkbremsung die vorgespannte Feder des Federspeichers durch ein Lösen der Haltevorrichtung entspannt und damit die Bremse zugespannt wird, wobei durch Betätigung der Haltevorrichtung die Feder beim Erreichen eines vorgegebenen Bremskraftniveaus durch eine mechanisch wirkende Bremse arretiert wird.

14. Verfahren nach Anspruch 13, **dadurch gekennzeichnet, daß** bei einer Parkbremsung im Umkehrpunkt einer durch das Mitdrehen des Elektromotors und des Getriebes beim Lösen der Feder bedingten mechanischen Schwingung beim Rückdrehen des Getriebes durch die Feder die Halteeinrichtung einsetzt, so daß eine zusätzliche Bremskraft erzeugt wird.

15. Steuerungsverfahren nach einem der Ansprüche 13-14, **dadurch gekennzeichnet, daß** der Elektromotor derart angesteuert wird, daß er bei einer Bremsung die Federkraft unterstützt und die Bremskraft erhöht.

16. Steuerungsverfahren nach einem der Ansprüche 13 - 15, **dadurch gekennzeichnet, daß** die Haltebremse durch einen Spannungsimpuls geöffnet wird und dann durch die vom als Generator angetriebenen Elektromotor abgegebene Spannung offen gehalten wird, bis diese Spannung bei langsamer werdendem Elektromotor in der Nähe dessen Umkehrpunktes zu klein wird.

17. Steuerungsverfahren nach einem der Ansprüche 13-16, **dadurch gekennzeichnet, daß** die Haltevorrichtung ein- oder mehrfach geöffnet wird, um bei heißgelaufener Bremse die Gleichgewichtsstellung der Feststellbremsfunktion einzustellen, während sich die Bremse abkühlt.

18. Steuerungsverfahren nach einem Ansprüche 13-17, **dadurch gekennzeichnet, daß** zur Erzielung einer schnellen Reaktion des Systems bei Betriebsbremsungen die Haltebremse außer Kraft gesetzt und die Haltekraft durch Bestromung der Motor-Getriebeeinheit erzeugt wird.

19. Steuerungsverfahren, vorzugsweise nach einem Ansprüche 13 - 18, **dadurch gekennzeichnet, daß** bei Bremsungen die Wirkung des pneumatisch betätigten Bremszylinderabschnittes mit der Wirkung des elektromechanisch betätigten Federspeicher-Bremszylinderabschnittes wie folgt kombiniert wird:

a) bei Betriebsbremsungen erfolgt die Bremsung ausschließlich durch den pneumatisch betätigten Bremszylinderabschnitt und die Parkbremsfunktion wird über den elektromechanisch betätigten Federspeicher-Bremszylinderabschnitt realisiert, oder
b) bei Betriebsbremsungen wird der pneumatisch betätigte Bremszylinderabschnitt durch den elektromechanisch betätigten Federspeicher-Bremszylinderabschnitt unterstützt, oder
c) der pneumatisch betätigte Bremszylinderabschnitt (39B) dient als reine Rückfallebene für Notfälle.

**Claims**

1.  Disc brake for vehicles, with

    a) a brake caliper (57, 67) comprising a brake disc (65),
    b) an applicator device arranged within the brake caliper (67),
    c) such that the applicator device comprises a pivoting lever (69) which preferably comprises an approximately semi-cylindrical eccentric extension (71),
    d) such that preferably, in addition, the eccentric extension (71) is fitted eccentrically into a half-shell bearing (72) and acts, via an eccentric shaft (75) and/or a crosspiece (77) on at least one adjustment spindle (72, 73) and on a pressure element (79) located at its end on the brake disc side, upon a brake shoe (81) mounted on the brake application side and able to move within the brake caliper,
    **characterised by**
    e) an electro-mechanical drive (29, 85) that acts directly - or indirectly via interposed further structural elements - on the pivoting lever (69).

2.  Disc brake according to Claim 1, **characterised in that** the applicator device comprises a brake cylinder with a spring brake cylinder section (39B) actuated by an electric motor with a push-rod to actuate the pivoting lever, which comprises the following:

    a) a spring (5) that can be stressed by a drive to actuate a push-rod (7) for applying and releasing the vehicle brake;
    b) such that the drive comprises an electric motor (29) and a gear system (27, 37) downstream from the electric motor (29);
    c) and such that the drive is associated with a holding device for holding the stressed spring (5), which comprises a mechanically and/or electromagnetically actuated brake (31) that produces the force for holding the spring.

3.  Disc brake according to Claims I or 2, **characterised in that** the brake cylinder also comprises a pneumatically actuated brake cylinder section (39A).

4.  Disc brake according to Claim 3, **characterised in that** the electric-motor-actuated spring brake cylinder section (39B) is combined with the pneumatically actuated (membrane) brake cylinder section (39A) to form a combination cylinder (39).

5.  Disc brake according to any of the preceding claims, **characterised in that** the brake (31) is designed as an electromagnetically actuated spring brake.

6.  Disc brake according to any of the preceding claims, **characterised in that** the gear system (27, 37) is coupled with a spindle device (11, 13) for stressing the spring (5), the electric motor (29) and a section of the gear system (27) being arranged as modules parallel to the spindle device (11, 13) for stressing the spring (5), the spindle device (11, 13) being designed as a spherical or roller threaded spindle (11) onto which is fitted a spindle nut (13), which is fixed by means of a mounting (15) in a housing (17) of the spring cylinder (1).

7.  Disc brake according to any of the preceding claims, **characterised in that** the gear system (27) comprises planetary gear, spur gear, worm gear or cyclo-gear in which the driveshaft (25) of the electric motor (29) engages on the drive input side, and the planetary gear, spur gear, worm gear or cyclo-gear (27) is coupled to the spindle device (11, 13) by a wrap-around drive such as a toothed belt (19) or a chain drive.

8.  Disc brake according to any of the preceding claims, **characterised in that** the holding device is arranged in the force transfer path from the electric motor (29) to the spring (5) in such manner that the force for holding the stressed spring (5) is reduced by the gearing transmission ratio.

9.  Disc brake according to any of the preceding claims, **characterised in that** the threaded spindle (13) and the push-rod (7) can move axially relative to one another.

10. Disc brake according to any of the preceding claims, **characterised in that** the threaded spindle and the push-rod are connected to one another via a slot joint (55), a key joint or an elastic element.

11. Disc brake according to any of the preceding claims, **characterised in that** the pivoting lever is provided with teeth (83, 85) in which a drive output gearwheel of a gear system of the electric motor engages.

12. Disc brake according to any of the preceding claims, **characterised in that** the pivoting lever is provided with worm gearing (95) in which a worm gear (97) of the gear system engages.

13. Method for controlling a disc brake according to any of the preceding claims, **characterised in that** during service or parking brake operation the pre-stressed spring of the spring system is relaxed by releasing the holding device and the brake is thereby applied, so that by actuating the holding device the spring is held by a mechanically operating brake when a predetermined brake force level has been reached.

14. Method according to Claim 13, **characterised in that** during parking brake operation at the inversion point of a mechanical oscillation caused by the conjoint rotation of the electric motor and the gear system when the spring is released, the when the gear system is reversed the holding device is applied by the spring, so that an additional force is produced.

15. Control method according to either of Claims 13 or 14, **characterised in that** the electric motor is controlled in such manner that during a braking operation it supports the spring force and increases the braking force.

16. Control method according to any of Claims 13 to 15, **characterised in that** the holding brake is opened by a voltage pulse and then held open by the voltage produced when the electric motor is driven as a generator, until this voltage becomes too small as the electric motor slows down close to its reversal point.

17. Control method according to any of Claims 13 to 16, **characterised in that** the holding device is opened one or more times in order that if the brake has been running hot, the equilibrium position of the parking brake function is adjusted while the brake cools down.

18. Control method according to any of Claims 13 to 17, **characterised in that** to achieve a rapid reaction when applying the service brakes, the holding brake is disengaged and the holding force is produced by energising the motor-gearing unit.

19. Control method preferably according to any of Claims 13 to 18, **characterised in that** during braking operations the action of the pneumatically actuated brake cylinder section is combined with the action of the electro-mechanically actuated spring brake cylinder section, as follows:

    a) for service brake application the braking is effected exclusively by the pneumatically actuated brake cylinder section and the parking brake function is effected by the electro-mechanically actuated spring brake cylinder section, or
    b) for service brake application the pneumatically actuated brake cylinder section is supported by the electro-mechanically actuated spring brake cylinder section, or
    c) the pneumatically actuated brake cylinder section (39B) serves as a pure backup level for emergency situations.

**Revendications**

1. Frein à disque pour des véhicules, comprenant

    a) un étrier (57, 67) de frein entourait un disque (65) de frein,
    b) un dispositif de serrage disposé à l'intérieur de l'étrier (57) de frein,
    c) dans lequel le dispositif de serrage a un levier (69) tournant qui comprend, de préférence, un prolongement (71) excentré hémicylindrique,
    d) dans lequel, de préférence, en outre, le prolongement (71) excentré est monté de manière excentrée dans un palier (73) en hémi-coquille et agit par un arbre (75) d'excentrique et/ou une traverse (77) sur au moins une broche (72, 73) de réglage et une pièce (79) d'application d'une pression reposant sur l'extrémité de la broche du côté du disque de frein agit sur une mâchoire (81) de frein montée coulissante du côté serrage dans l'étrier de frein,
    **caractérisé par**
    e) un autre entraînement (29, 85) électromécanique agissant sur le levier (69) tournant directement ou indirectement par d'autres éléments interposés.

**2.** Frein à disque suivant la revendication 1, **caractérisé en ce que** le dispositif de serrage comprend un cylindre de frein ayant une partie (39B) de cylindre de frein à ressort accumulateur actionné par moteur électrique et ayant un poussoir pour l'actionnement du levier tournant, qui a ce qui suit :

a) un ressort (5) pouvant être bandé par l'entraînement et destiné à actionner un poussoir (7) pour le serrage et de desserrage du frein du véhicule ;
b) dans lequel l'entraînement comprend un moteur (29) électrique et une transmission (27, 37) en aval du moteur (29) électrique ;
c) et dans lequel à l'entraînement est associé un dispositif de maintien du ressort (25) bandé, dispositif qui a un frein (31) pouvant être actionné mécaniquement et/ou électromagnétiquement et qui produit la force pour le maintien du ressort.

**3.** Frein à disque suivant la revendication 1 ou 2, **caractérisé en ce que** le cylindre de frein a, en outre, une partie (39A) de cylindre de frein actionnée pneumatiquement.

**4.** Frein à disque suivant la revendication 3, **caractérisé en ce que** la partie (39B) du cylindre de frein à ressort accumulateur actionnée par un moteur électrique est rassemblée avec la partie (39A) de cylindre de frein (à membrane) actionnée pneumatiquement en un cylindre (39) combiné.

**5.** Frein à disque suivant l'une des revendications précédentes, **caractérisé en ce que** le frein (31) est conçu en tant que frein à compression de ressort pouvant être actionné électromagnétiquement.

**6.** Frein à disque suivant l'une des revendications précédentes, **caractérisé en ce que** la transmission (27, 37) est couplée à un dispositif (11, 31) à broche pour bander le ressort (5) dans lequel le moteur (29) électrique et une partie de la transmission(27) sont disposés de façon modulaire parallèlement à la direction (11, 13) de la broche pour bander le ressort (5), le dispositif (11, 31) à broche étant conçu à broche (11), à filetage, à bille ou à galet sur lequel vient un écrou (13) de broche qui est immobilisé par un palier (15) dans une partie (17) de boîtier du cylindre (1) à ressort accumulateur.

**7.** Frein à disque suivant l'une des revendications précédentes, **caractérisé en ce que** la transmission (27) comprend un engrenage planétaire, un engrenage droit, une vis sans fin ou un engrenage cycloïdal dans lequel engrène, du côté de l'entraînement, l'arbre (25) d'entraînement du moteur (29) électrique, l'engrenage (27) planétaire à roue droite, à vis sans fin ou cycloïdal étant couplé au dispositif (11, 13) à broche par une transmission à enroulement, comme une courroie (19) dentée ou une chaîne.

**8.** Frein à disque suivant l'une des revendications précédentes, **caractérisé en ce que** le dispositif de maintien est disposé dans la voie de transmission de forces allant du moteur (29) électrique au ressort (5), de façon à ce que la force de maintien du ressort (5) bandé soit réduite par sous-multiplication par engrenage.

**9.** Frein à disque suivant l'une des revendications précédentes, **caractérisé en ce que** la broche (13) filetée et le poussoir (7) sont montés coulissants axialement l'un par rapport à l'autre.

**10.** Frein à disque suivant l'une des revendications précédentes, **caractérisé en ce que** la broche filetée et le poussoir sont reliés entre eux par une liaison (55) par boutonnière, une liaison par clavette ou par un élément élastique.

**11.** Frein à disque suivant l'une des revendications précédentes, **caractérisé en ce que** le levier tournant est muni d'une denture (83, 95) dans laquelle engrène une roue (85, 97) de sortie d'une transmission du moteur électrique.

**12.** Frein à disque suivant l'une des revendications précédentes, **caractérisé en ce que** le levier tournant est pourvu d'une denture (95) à roue à denture hélicoïdale dans laquelle engrène une roue (97) à denture hélicoïdale de la transmission.

**13.** Procédé de commande d'un frein à disque suivant l'une des revendications précédentes, **caractérisé en ce que**, lors d'un freinage de service ou de stationnement, on débande le ressort pré-bandé du ressort accumulateur en desserrant le dispositif de maintien et on serre ainsi le frein, dans lequel, par actionnement du dispositif de maintien, le ressort est, lorsqu'un niveau de forces de freinage prescrit est atteint, bloqué par un frein agissant mécaniquement.

EP 1 071 598 B1

**14.** Procédé suivant la revendication 13, **caractérisé en ce que**, lors d'un freinage de stationnement, on règle au point de rebroussement d'une oscillation mécanique, provoquée par l'entraînement du moteur électrique et de la transmission lorsque le ressort est débandé par la rotation en retour de la transmission par le ressort, le dispositif de maintien de manière à produire une force de freinage supplémentaire.

**15.** Procédé de commande suivant l'une des revendications 13 ou 14, **caractérisé en ce que** l'on commande le moteur électrique de façon à favoriser lors d'un freinage la force du ressort et à augmenter la force de freinage.

**16.** Procédé de commande suivant l'une des revendications 13 à 15, **caractérisé en ce que** l'on ouvre le dispositif de maintien par une impulsion de tension et ensuite on le maintient ouvert par la tension cédée par le moteur électrique entraîné en générateur jusqu'à ce que cette tension, lorsque le moteur électrique devient plus lent, devienne trop petite à proximité de son point de rebroussement.

**17.** Procédé de commande suivant l'une des revendications 13 à 16, **caractérisé en ce que** l'on ouvre une fois ou plusieurs fois le dispositif de maintien pour régler, lorsque le frein fonctionne à chaud, le point d'équilibre de la fonction de freinage de stationnement pendant que le frein se refroidit.

**18.** Procédé de commande suivant l'une des revendications 13 à 17, **caractérisé en ce que** pour obtenir une réaction rapide du système lors de freinage de service, on n'applique pas de force au frein de maintien et on produit la force de maintien en alimentant le groupe motoréducteur.

**19.** Procédé de commande de fréquence suivant l'une des revendications 13 à 18, **caractérisé en ce que** pour des freinages, on combine l'effet de la partie du cylindre de frein actionnée pneumatiquement à l'effet de la partie du cylindre de frein à ressort accumulateur actionnée électro-mécaniquement de la manière suivants :

a) pour des freinages de service, le freinage s'effectue exclusivement par la partie du cylindre de frein actionnée pneumatiquement et la fonction de frein de stationnement est réalisée par la partie de cylindre de frein à ressort accumulateur actionnée électro-mécaniquement ou

b) pour des freinages de service, on assiste la partie de cylindre de frein actionnée mécaniquement par la partie de cylindre de frein à ressort accumulateur actionnée électro-mécaniquement ou

c) la partie (39B) de cylindre de frein actionnée pneumatiquement sert simplement de simple recours pour des cas d'urgence.

*Fig. 1*

EP 1 071 598 B1

Fig. 2

Fig. 3

EP 1 071 598 B1

51 53 55 61 7 63

*Fig. 4*

Fig. 5

87,89

95

97

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4212405
- EP 0129969 A
- EP 0283947 A